# EUROPEAN PATENT SPECIFICATION

(11) **EP 2 442 312 B1**
(45) Date of publication and mention of the grant of the patent: **10.01.2018**
(21) Application number: 10785781.5
(22) Date of filing: 08.06.2010
(51) Int. Cl.: G21C 17/06, G21F 1/08

(54) **SCANNER FOR ANALYZING A NUCLEAR FUEL ROD**
SCANNER ZUR ANALYSE EINES NUKLEAREN BRENNSTABS
SCANNER POUR L'ANALYSE D'UNE BARRE DE COMBUSTIBLE NUCLÉAIRE

(30) Priority: 08.06.2009 ES 200930277
(43) Date of publication of application: 18.04.2012
(73) Proprietor: ENUSA INDUSTRIAS AVANZADAS, S.A., 28040 Madrid (ES)
(72) Inventor: RODERO RODERO, José, María, E-28040 Madrid (ES); ALVAREZ GONZALEZ, Pedro, E-28040 Madrid (ES)
(74) Representative: Carpintero Lopez, Francisco
(86) International application number: PCT/ES2010/070380
(87) International publication number: WO 2010/142830

(56) References cited:
- WO-A1-2005/008680
- FR-A1- 2 880 179
- JP-A- 2003 149 344
- US-A1- 2006 056 566
- ABBAS K ET AL: "In situ gamma spectroscopy of spent nuclear fuel using a CdTe detector", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 383, no. 2, 11 December 1996 (1996-12-11), pages 601-604, XP004016226, ISSN: 0168-9002, DOI: 10.1016/S0168-9002(96)00843-1
- ABBAS K ET AL: "Gamma spectrometry of spent nuclear fuel using a miniature CdTe detector", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. A376, no. 2, 1 July 1996 (1996-07-01) , pages 248-253, XP004018575, ISSN: 0168-9002, DOI: 10.1016/0168-9002(96)00227-6
- MATSSON INGVAR: "Studies of Nuclear Fuel Performance Using On-site Gamma-ray Spectroscopy and In-pile Measurements", DISSERATION, ACTA UNIVERSITATIS UPSALIENSIS UPPSALA, SE, 7 June 2006 (2006-06-07), pages 1-104, XP008148686, ISBN: 91-554-6582-X
- K. ABBAS ET AL.: 'In situ gamma spectroscopy of spent nuclear futhe using a CdTe detector' NUCLEAR INSTRUMENTS AND METHODS IN PHYSICS RESEARCH vol. 383, no. 2-3, December 1996, pages 601 - 604, XP004016226
- K. ABBAS ET AL.: 'Gamma Spectrometry of spent nuclear futhe using a miniature CdTe detector' NUCLEAR INSTRUMENTS AND METHODS IN PHYSICS RESEARCH vol. 376, no. 2, July 1996, pages 248 - 253, XP004018575
- LORENZ M. ET AL.: 'Portable gamma spectrometry system for simultaneous monitoring of radiotracers in vivo using CdTe and CdZnTe radiation detector probes' NUCLEAR INSTRUMENTS AND METHODS IN PHYSICS RESEARCH vol. 353, no. 1-3,30, December 1994, pages 448 - 452, XP004005915
- MATSSON, INGVAR: 'Studies of nuclear futhe performance using on-site gamma-ray spectroscopy and in-pile measurements' ACTA UNIVERSITATIS UPSALIENSIS June 2006, XP008148686

## Description

### Field of the Invention

The present invention applies to the field of nuclear fuel inspection equipment, more particularly, to an irradiated fuel rod scanner.

### Background of the Invention

Fuel elements comprising a plurality of nuclear fuel rods arranged in the form of a matrix in rows and columns are used in nuclear reactors. These rods include fuel pellets, for example, of uranium (U), in the form of uranium oxide (UO₂), usually enriched with ²³⁵U.

There are several devices for studying several characteristic parameters of the performance of fuel rods (linear emitted heat or burn-up distribution, fission gas emission, interaction of the fuel elements with the walls of the rods, etc.). In particular, an important parameter to consider is burn-up, a measure of the amount of thermal energy produced in the fuel and which can be expressed as the number of fissions per 100 heavy nuclei (atomic mass >=232) initially present in the fuel. The non-invasive measures of the burn-up can be based on detecting for example the activity of the ¹³⁷Cs isotope using medium or high resolution gamma ray detectors. There are, for example, germanium crystal-based gamma ray detectors which are used to measure the gamma radiation emitted by the fuel elements after using the same in the nuclear reactor, such as that described in the publication "Studies of Nuclear Fuel Performance Using On-site Gamma-ray Spectroscopy and In-pile Measurements, Ingvar Matsson, ISBN 91-554-6582-X".

This germanium detector requires cooling with liquid nitrogen, which makes the unit and its operation complex.

Measurements of this type, which can include spectrometry, are necessary to check that the fuel has burnt-up as was intended and up to the predetermined limit, which is important for the subsequent treatment and storage of the fuel element once used.

There are also apparatuses for measuring and analyzing the gases externally emitted by the fuel rods, as described in patent FR 2726936 A1. However, the concentration of gas in the highest inner part of the fuel rods and where the spring is located (plenum) is a parameter of increasing interest, a parameter directly related to the activity of the fuel during the burn-up. Devices facilitating the measurement of these gas concentrations inside the rod are therefore necessary.

Other devices and set-ups to measure such gas concentrations are disclosed for example in "In situ gamma spectroscopy of spent nuclear fuel using a CdTe detector" by Abbas, Nicolaou, and Koch of 1996; and also for example in document FR2880179 A1. The cost of the different measurement equipment today is also high, and its transport and assembly are difficult due to its large size and the weight of the shield.

### Object of the Invention

The present invention aims to solve the aforementioned problems by means of a scanner as defined in claim 1. The shield is preferably made of a very dense material with a high atomic number, such as tungsten. The positioning means would be orifices in the shield and the rod orifice. There could optionally be several detectors in corresponding orifices. There can be a collimator and/or a filter for detecting the isotopes of interest (the ⁸⁵Kr isotope, or the ¹³⁴Cs, ¹³⁷Cs, ¹⁵⁴Eu, ¹⁰⁶Ru or ¹⁴⁰La isotopes) associated with each detector. The device preferably includes motorised means capable of moving the rod in the orifice corresponding to it at a controlled speed and an insertion pipe between the fuel rod and its corresponding orifice. The scanner can coupled to a rack of fuel elements in a temporary storage pool by means of a platform configured for such use.

As a result of the Cd(Zn)Te detector the device of the invention is much smaller than the devices known up until now and furthermore does not require cooling by liquid nitrogen, reducing the cost and complexity of the system.

The device object of the invention further has the advantage of being able to make different measurements on a single rod with different filters and/or detectors with different resolutions which are easily interchangeable.

### Brief Description of the Drawings

For the purpose of aiding to better understand the present description according to a preferred practical embodiment of the invention, the following drawings are attached with an illustrative and non-limiting character
Figure 1 shows a vertical section of an embodiment of the invention.
Figure 2 shows an axial section of said embodiment.
Figure 3 shows a perspective view of the apparatus placed in the reactor pool rack, according to an embodiment of the invention.
Figure 4 shows a vertical section of an embodiment with several detectors.

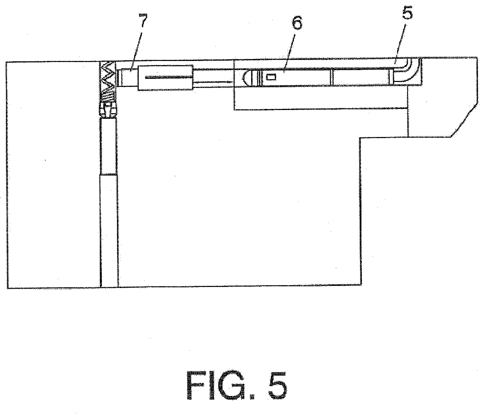

Figure 5 shows details of the filters and the plenum region.

### Detailed Description of the Invention

The rod scanner of the invention performs a medium resolution gamma spectrometry inspection by means of a solid state detector. The information supplied by the rod scanner must obtain:
- the burn-up and cooling time measurement from obtaining the ¹³⁷Cs, ¹³⁴Cs, ¹⁰⁶Ru and ¹⁵⁴Eu isotopic measurements, regardless of the preceding rod information
- the profile of the isotopes of interest ¹³⁷Cs, ¹³⁴Cs, ¹⁵⁴Eu, ¹⁰⁶Ru and total gamma and consequently the burn-up profile.
- millimetric information of the homogeneity of the pellet column and of its exact length
- the ⁸⁵Kr measurement in the plenum (FGR - Fission Gas Release) used for measuring the pressure within the rod
- the profile ¹⁴⁰La in determining the power at the end of a cycle (measurement at 5 weeks)
- capacity to determine ⁶⁰Co contamination in the pellet area and in the plenum.

The rod scanner essentially obtains the same basic characterization information as the Ge high resolution scanner of the state of the art, including the ⁸⁵Kr measurement. Furthermore, the axial position control system allows in carrying out the profile of the rod synchronously acquiring the position with respect to the gamma radiation of the region of interest or with respect to the total gamma radiation.

The detector is a TeCd semiconductor crystal with Zn as an impurity, a compound which is commonly referred to as CZT. A detector is needed which provides valid information in the measurement range up to 200,000 photons/second, sufficiently efficient for energies of > 300 Kev and capable of providing sufficient resolution at room temperature (around 30º). The detectors will be incorporated into pressurised leak-tight casings to work at about 10 meters under water. The main control radiation can correspond to ¹³⁷Cs which is selected by providing burn-up information with cooling times >6 months. If the cooling time is lower, the inspection with a cooling time suitable for the ¹⁴⁰La measurement (from 5 to 6 weeks) can be performed. This measurement range in scanner energies covers energies after ¹⁰⁶Ru energy. It therefore covers the measurement of ¹³⁴Cs, of ¹³⁷Cs, of ¹⁵⁴Eu, and of ¹⁴⁰La, as required for the intended objectives.

The measured radiation between 500 and 1500 Kev are necessary for determining the burn-up with a cooling between 6 months and 100 years. Following the operation in a reactor with a specific energy above 10 Mwd/TnU, the measurement times should be prolonged significantly for lower burn-ups.

The proven CZT detectors meet these specifications and requirements. The ⁸⁵Kr measurement with the rod scanner will provide the ⁸⁵Kr partial pressure in the spring region when geometry calibration templates, concentration range and constitution which are equivalent to the analysed rods are available, the measurement is made at a point of the plenum region in which, due to the distance from the fuel, the presence of isotopes generating interference in the measurement are not expected, in any case, the absence of such isotopes is provable by the technique itself.

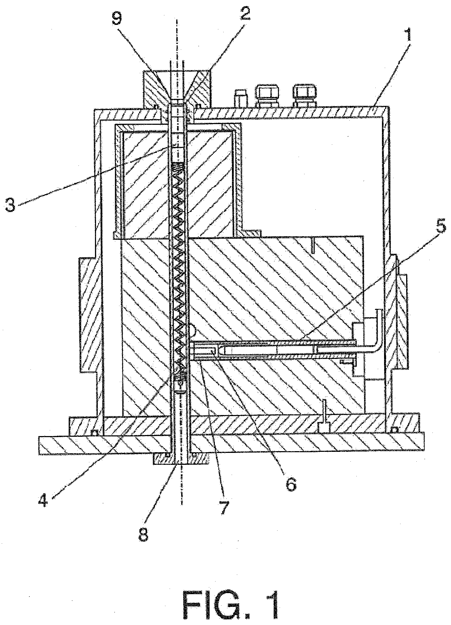

The detector or detectors are placed in a tungsten shield, as seen in the figures, being collimated by an orifice or groove. The rod to be analysed is placed in an orifice perpendicular to the previous one in order to optimize the relative position of the detector and the area of interest of the rod. In Figure 1 the region of the plenum region (4) and the pellet region (3) can be seen.

The spectrum analyser distinguishes the emissions of the isotopes of interest: ¹³⁷Cs, ¹³⁴Cs, ¹⁵⁴Eu, and ¹⁴⁰La, such that their measurement corresponds with the abundance thereof in the rod. Filters which selectively absorb the radiation reaching the detector can be incorporated in the measurement.

The scanner of the invention provides the maximum relevant information in safety conditions with a limited assembly and operational cost, i.e., axial profilometry of burn-up, of anomalies in the pellet column, ⁸⁵Kr concentration in the spring region and spectrum analysis of isotopes of interest in fixed axial positions and identified with axial position control.

The proposed system performs a complete gamma characterisation of the rod in medium resolution with static control of the detector/rod distance and recording in a file the axial location and the time elapsed from the start. Precision in the measurements is thus assured and variability is thus reduced.

The rod is placed in the equipment by means of an autonomous motorised auxiliary rod handling tool, providing a secure location minimally interfering with the work in the fuel pool. The tool securing the rod has a clamp element for grabbing the rod in a secure position, the tool introduces the rod into the scanner (Figure 1) through an orifice (8) with a guiding element or funnel (9), and has a system which allows varying and controlling the speed for adjusting it to that required by the inspection. The autonomous rod feed system is preferably a worm screw type with digitalised speed control. The tool can be anchored to the edge of the power station pool or by means of a pulley block which is suspended from the structure or from the fuel pool handling crane itself. This system allows automating the process, eliminating the intervention of the operator, and incorporating self-checking sequences.

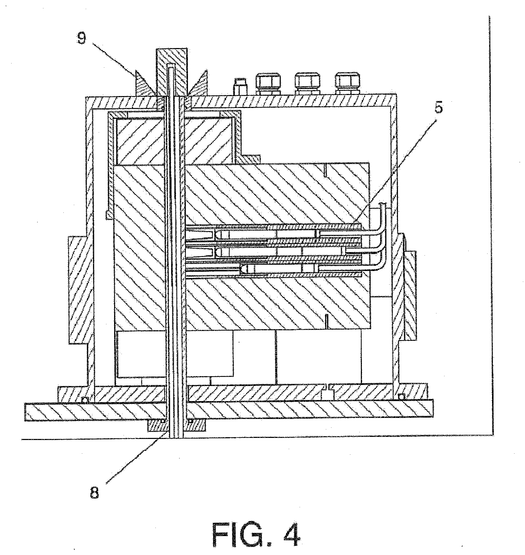

The movement of the rod is at a speed controlled through the detectors and collimators (6), the number of which can vary according to needs (see Figures 1 and 4), in principle without any limit, the position of the detectors being controlled with respect to the height of the rod. This position is associated with the signal of the detectors. The mechanical design assures the immobilisation of each detector in a fixed and reproducible position (see figures).

The system performs a gamma profilometry of the region of interest (ROI) of ¹³⁷Cs or of any another penetrating gamma emitting isotope, simultaneously acquiring medium resolution gamma spectrums for discriminating the isotopes, for example ¹³⁷Cs, ¹³⁴Cs and ¹⁵⁴Eu. The equipment allows selecting the collimator (7) to be used in each inspection, adapted to the characteristics of the rod, to the profilometry, to optimisation of the dead time and to minimisation of the annihilation peak generated by the interaction of the ⁶⁰Co radiation in the measurement of the ⁸⁵Kr plenum region.

The device also incorporates a measurement system in the plenum region which allows determining the ⁸⁵Kr isotope for determining the internal pressure of the rod by means of applying computational methods which take away the influence of the radiation originating from the material of the rod and spring (see Figure 1).

The signal of the detectors is processed by means of line devices such as digital oscilloscopes and multi-channel analysers. The detector/electronics assembly allows the immediate evaluation of the degree of burn-up and a comparison with the acceptance limit. The system displays the result of the inspection on screen by means of processing the signals of the detectors, indicating the parameters such as the concentration of ⁸⁵Kr activity, degree of burn-up and degree of cooling, length of pellet column and profile with information about the measurement allowing complete verification. The radiometry analyst is limited solely to a task of supervising the process and identifying the rod in the system. The position, elapsed time, real time gamma spectrums and gamma profile cps indications are supervised on screen. In short, there is no operator intervention in the inspection equipment measurement process, with the exception of moving the rod to the scanner.

The detector/detectors can be 5 mm³ CZT detectors or the like for measurements related to the fuel pellet region, such detector providing rapid pulses such that profilometry in reasonable counting times is made possible and the spectrums obtained allow an immediate discrimination between the reference isotopes. The collimator, which can be made of tungsten or another equivalent material, is provided with a slit filter for profilometry starting from ∼0.5mm and is designed with the suitable thickness for minimising scattered radiation. Furthermore, a filter is incorporated which can also be made of tungsten or another high Z material for reducing the energy pulses less than 500kev in the processor as much as possible. Therefore the type of impulses reaching the digital processor carrying information of interest is maximised and the counting time is thus optimised by reducing the dead time and scattered radiation.

For measurements in the plenum region medium resolution detectors are incorporated, which can be 10mm³ CdZnTe (CZT) detectors or the like which provide rapid pulses such that the ⁸⁵Kr peak measurement in reasonable counting times is made possible. The thus obtained spectrums allow a suitable discrimination capacity. The collimator can be made of tungsten or another equivalent material and is designed, as mentioned above in the case of the pellet region, with the ideal thickness for minimising scattered radiation. Furthermore a filter can be incorporated which can also be made of tungsten or another high Z material, for reducing the energy pulses less than 400kev, maximising the type of impulses reaching the digital processor carrying information of interest and optimising the counting time by reducing the dead time and scattered radiation. The measurement related to the ⁸⁵Kr isotope allows determining the internal pressure of the rod by means of applying computational methods for taking away the radiation originating from the material of the rod and spring.

A further advantage of the equipment is that it allows performing numerous adjustments according to measurements to be performed: inserting collimator bushings adapted to the geometry of the rod, interpolating filters of different characteristics and moving the detector away from of the rod for cases in which the detector sensitivity so requires. The shield allows easily incorporating filters of different thicknesses according to the measurement requirements of rods of different geometries, degrees of burn-up or degrees of cooling. Measurements of rods with different geometries can also be made, as a result of which introducing different insertion pipes in the rod orifice is possible.

The device can incorporate an axial position encoder, integrating this information with that corresponding to the active detectors each one scanning a narrow band of the horizontal plane at a different height of the rod.

The common shield containing the detectors and collimator is leak-tight and pressurised. The axial position and each measurement are simultaneously recorded in a synchronised manner from the beginning to the end of the pellet column (from the fuel pellet contacting with the lower cap of the rod until the fuel pellet contacting with the spring of the rod plenum) for performing profiles.

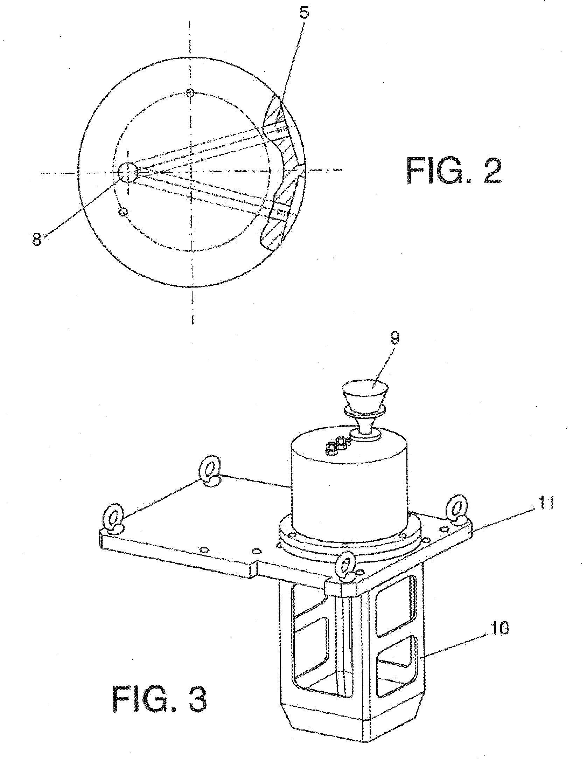

In the preferred example of Figure 4, 3 gamma analysers which are made up of 3 CZT detectors at room temperature (of sensitive volume of 1 to 60 mm³) and 3 tungsten collimators integrated in a common shield with grooved or tapered windows adapted to the inspections which will be carried out are incorporated.

Thus, there can be two collimators/detectors suitable for the ⁸⁵Kr measurement in the plenum for the purpose of obtaining doubly contrasted information of said determination and of a collimator/detector for measuring the profile and burn-up of the pellet region.

Optionally, instead of two detectors for the ⁸⁵Kr measurement, a collimator/detector suitable for the ⁸⁵Kr measurement in the plenum, a collimator/detector for measuring the profile and burn-up of the pellet region and a collimator/detector suitable for measuring anomalies in the pellet column can be provided.

Summing up, pre-configuring the arrangement of the collimators/detectors, adapting to the needs at all times, for the purpose of not having to remove the equipment from the water is possible.

Figure 3 shows how the lower area of the platform bearing the shield is provided with a structure configured for allowing it to be coupled in a rack for fuel elements in a storage pool.

The device of the invention does not require nitrogen supply, the shield is lightweight, simple to install, operate and maintain. Other advantages of the device are that it allows making the measurement from almost any degree of cooling and degree of burn-up. Varying the shape of the rod is also possible as a result of it being possible to introduce different guides in the rod orifice.

The invention is not limited to the specific embodiments which have been described rather it also covers, for example, the variants which can be carried out by the person having average skill in the art (for example, in terms of the selection of materials, dimensions, components, configuration, etc.), from what is inferred from the claims.

## Claims

1. Scanner for analysing a nuclear fuel rod (2), comprising at least one detector (6), a shield (1) made of a material capable of protecting against radiation and rod positioning means and positioning means of said at least one detector (6), wherein the detector is made up of TeCd doped with Zn or another semiconductor of similar characteristics and the rod positioning means and the detector are located with respect to each other such that they allow the detector to detect isotopes of interest and **characterised in that** the positioning means of the at least one detector comprise at least one orifice (5) for receiving the detector (6) and another orifice (8) for receiving the rod (2), wherein the rod positioning means and the positioning means of the at least one detector are located in the shield.

2. Scanner according to claim 1, **characterised in that** the shield (1) is made of a very dense material with a high atomic number.

3. Scanner according to claim 2, **characterised in that** the shield is made of tungsten.

4. Scanner according to any of the preceding claims, **characterised in that** said rod positioning means further comprise a guiding element (9) for the rod, located in the shield, in order to facilitate inserting the rod in its orifice.

5. Scanner according to any of the preceding claims , **characterised in that** it comprises several detectors (6) and the positioning means of the detectors comprise one orifice (5) for each detector (6).

6. Scanner according to any of the preceding claims, **characterised in that** the detector/detectors incorporate a filter (7) for certain isotopes.

7. Scanner according to claim 6, **characterised in that** the filter-detector assembly (7) is capable of detecting the ⁸⁵Kr isotope, or the ¹³⁴Cs, ¹³⁷Cs, ¹⁵⁴Eu, ¹⁰⁶Ru isotopes or the ¹⁴⁰La isotope.

8. Scanner according to any of the preceding claims, **characterised in that** it further incorporates one collimator per detector adapted to the isotope or isotopes to be measured.

9. Scanner according to any of the preceding claims, **characterised in that** it comprises motorised means capable of moving the rod in its corresponding orifice at a controlled speed.

10. Scanner according to any of the preceding claims, **characterised in that** it comprises an insertion pipe between the fuel rod (2) and its corresponding orifice (8).

11. Scanner according to any of the preceding claims, **characterised in that** it comprises a platform (11) configured for coupling the apparatus (1) to a rack (10) of fuel elements in temporary fuel element storage pool.

## Patentansprüche

1. Scanner zur Analyse eines Brennelemente-Stabs (2), umfassend zumindest einen Detektor (6), ein Schild aus Material, welches zum Schutz gegen Strahlung geeignet ist, Stabpositioniermittel und Positioniermittel des zumindest einen Detektors (6), wobei der Detektor aus TeCd dotiert mit Zn oder einem anderen Halbleiter mit ähnlichen Eigenschaften zusammengesetzt ist und das Stabpositioniermittel und der Detektor derart in Bezug aufeinander angeordnet sind, dass sie dem Detektor ermöglichen, gewünschte Isotope zu detektieren und
**dadurch gekennzeichnet, dass**
die Positioniermittel des zumindest einen Detektors zumindest eine Öffnung (5) zur Aufnahme des Detektors (6) und eine weitere Öffnung (8) zur Aufnahme des Stabs (2) umfasst, wobei die Stabpositioniermittel und die Positioniermittel des zumindest einen Detektors in dem Schild angeordnet sind.

2. Scanner gemäß Anspruch 1, **dadurch gekennzeichnet, dass** das Schild (1) aus sehr dichtem Material mit einer hohen Ordnungszahl ausgebildet ist.

3. Scanner gemäß Anspruch 2, **dadurch gekennzeichnet, dass** das Schild (1) aus Wolfram ausgebildet ist.

4. Scanner gemäß einem der vorhergehenden Ansprüche, **dadurch gekennzeichnet, dass** das Stabpositioniermittel weiter ein Führungselement (9) für den Stab, angeordnet im Schild, aufweist, um ein Einführen des Stabes in dessen Öffnung zu erleichtern.

5. Scanner gemäß einem der vorhergehenden Ansprüche, **dadurch gekennzeichnet, dass** er verschiedene Detektoren (6) umfasst und die Positioniermittel der Detektoren eine Öffnung (5) für jeden Detektor (6) aufweisen.

6. Scanner gemäß einem der vorhergehenden Ansprüche, **dadurch gekennzeichnet, dass** der Detektor/die Detektoren einen Filter (7) für bestimmte Isotope enthalten.

7. Scanner gemäß Anspruch 6, **dadurch gekennzeichnet, dass** die Filter-DetektorAnordnung (7) fähig zum Detektieren des ⁸⁵Kr Isotops, oder der ¹³⁴Cs, ¹³⁷Cs, ¹⁵⁴Eu, ¹⁰⁶Ru Isotope oder des ¹⁴⁰La Isotops ist.

8. Scanner gemäß einem der vorhergehenden Ansprüche, **dadurch gekennzeichnet, dass** er zusätzlich ein Kollimator pro Detektor beinhaltet, angepasst an das zu messende Isotop oder die zu messenden Isotope.

9. Scanner gemäß einem der vorhergehenden Ansprüche, **dadurch gekennzeichnet, dass** er motorisierte Mittel umfasst, die geeignet zum Bewegen des Stabes in seine zugeordnete Öffnung mit einer kontrollierten Geschwindigkeit sind.

10. Scanner gemäß einem der vorhergehenden Ansprüche, **dadurch gekennzeichnet, dass** er ein Einführrohr zwischen dem Brennstab (2) und seiner zugeordneten Öffnung (8) umfasst.

11. Scanner gemäß einem der vorhergehenden Ansprüche, **dadurch gekennzeichnet, dass** er eine Plattform (11), ausgebildet zum Koppeln der Vorrichtung (1) an ein Gestell (10) von Brennelementen in einem temporären Brennelemente-Lagerbecken, umfasst.

## Revendications

1. Scanner pour analyser une barre de combustible nucléaire (2), comprenant au moins un détecteur (6), un blindage (1) composé d'un matériau capable de protéger contre le rayonnement, et un moyen de positionnement de barre et un moyen de positionnement dudit au moins un détecteur (6),
dans lequel le détecteur est composé de TeCd dopé avec du Zn ou un autre semi-conducteur de caractéristiques similaires et le moyen de positionnement de barre et le détecteur se situent l'un par rapport à l'autre de telle sorte qu'ils permettent au détecteur de détecter des isotopes d'intérêt et **caractérisé en ce que** le moyen de positionnement de l'au moins un détecteur comprend au moins un orifice (5) pour recevoir le détecteur (6) et un autre orifice (8) pour recevoir la barre (2), dans lequel le moyen de positionnement de barre et le moyen de positionnement de l'au moins un détecteur se trouvent dans le blindage.

2. Scanner selon la revendication 1, **caractérisé en ce que** le blindage (1) se compose d'un matériau très dense ayant un numéro atomique élevé.

3. Scanner selon la revendication 2, **caractérisé en ce que** le blindage se compose de tungstène.

4. Scanner selon l'une quelconque des revendications précédentes, **caractérisé en ce que** ledit moyen de positionnement de barre comprend en outre un élément de guidage (9) pour la barre, situé dans le blindage, afin de faciliter l'insertion de la barre dans son orifice.

5. Scanner selon l'une quelconque des revendications précédentes, **caractérisé en ce qu'**il comprend plusieurs détecteurs (6) et le moyen de positionnement des détecteurs comprend un orifice (5) pour chaque détecteur (6).

6. Scanner selon l'une quelconque des revendications précédentes, **caractérisé en ce que** le détecteur/les détecteurs incorporent un filtre (7) pour certains isotopes.

7. Scanner selon la revendication 6, **caractérisé en ce que** l'ensemble filtre-détecteur (7) est capable de détecter l'isotope ⁸⁵Kr, ou les isotopes ¹³⁴Cs, ¹³⁷Cs, ¹⁵⁴Eu, ¹⁰⁶Ru ou l'isotope ¹⁴⁰La.

8. Scanner selon l'une quelconque des revendications précédentes, **caractérisé en ce qu'**il incorpore en outre un collimateur par détecteur adapté à l'isotope ou aux isotopes à mesurer.

9. Scanner selon l'une quelconque des revendications précédentes, **caractérisé en ce qu'**il comprend un moyen motorisé capable de déplacer la barre dans son orifice correspondant à une vitesse régulée.

10. Scanner selon l'une quelconque des revendications précédentes, **caractérisé en ce qu'**il comprend en outre un tuyau d'insertion entre la barre de combustible (2) et son orifice correspondant (8).

11. Scanner selon l'une quelconque des revendications précédentes, **caractérisé en ce qu'**il comprend en outre une plateforme (11) configurée pour accoupler l'appareil (1) à un support (10) d'éléments combustibles dans un bassin de stockage d'élément combustible provisoire.
